Europäisches Patentamt

European Patent Office

Office européen des brevets

(19)

(11) **EP 1 677 083 A1**

(12) **DEMANDE DE BREVET EUROPEEN**

(43) Date de publication:
**05.07.2006 Bulletin 2006/27**

(51) Int Cl.:
***G01F 23/26*** (2006.01)

(21) Numéro de dépôt: **04106867.7**

(22) Date de dépôt: **22.12.2004**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **Roxer Industries S.A.**
**B-7180 Seneffe (BE)**

(72) Inventeurs:
• **Barlesi, Lorenzo**
**6000, Charleroi (BE)**
• **Chiaffi, Michel**
**60600, Breuil Le Vert (FR)**

(74) Mandataire: **Van Straaten, Joop et al**
**Office Kirkpatrick,**
**Avenue Wolfers, 32**
**1310 La Hulpe (BE)**

(54) **Capteur de niveau d'un liquide.**

(57) L'invention concerne un capteur (2) capacitif de niveau (52) d'un liquide (54) d'un réservoir (48), incluant un support (4) longitudinal plat, incluant des parties proximale (8), centrale (10) et distale (12); et des moyens de connexion (6), situés dans la partie proximale (8), pour connecter électriquement le support (4) et l'extérieur du support (4); une paire de mesure (14), incluant des branches interdigitées et disposées sur le support (4) au moins dans sa partie centrale (10); et une paire de référence (16), incluant des branches interdigitées et disposées sur le support (4) dans sa partie distale (12). Le support (4) inclut au moins trois couches; et la paire de référence (16) est liée à au moins une piste de connexion (26) située dans une couche intérieure (24) du support (4) et liée aux moyens de connexion (6). L'invention concerne aussi un réservoir (48) incluant un tel capteur (2).

Fig. 1

EP 1 677 083 A1

**Description**

**Domaine de l'invention**

L'invention concerne un capteur capacitif de niveau d'un liquide d'un réservoir, incluant un support longitudinal et substantiellement plat, destiné à être disposé dans le réservoir, le support incluant une partie proximale, une partie centrale et une partie distale; et des moyens de connexion, situés dans la partie proximale, pour connecter électriquement le support et l'extérieur du support; une première paire d'électrodes, dite paire de mesure, incluant des branches interdigitées et disposées sur le support au moins dans sa partie centrale; et une deuxième paire d'électrodes, dite paire de référence, incluant des branches interdigitées et disposées sur le support dans sa partie distale.

L'invention concerne en outre un réservoir incluant un tel capteur.

**État de la technique**

De tels capteurs capacitifs sont déjà connus dans l'état de la technique.

Par exemple, le brevet américain US 4,296,630 décrit un appareil pour mesurer le niveau d'un fluide dans un récipient via l'utilisation sur une ligne ruban d'électrodes de mesures formant un condensateur de mesure et d'électrodes de compensation formant un condensateur de compensation, grâce auquel l'effet de la constante diélectrique variable du milieu sur le résultat de la mesure peut être compensé grâce à un circuit d'évaluation. Dans cet appareil de l'état de la technique, les électrodes de mesure et les électrodes de compensation sont arrangées sur une piste oblongue commune d'une manière telle que les électrodes de compensation sont situées près d'au moins une conduite d'aspiration du milieu et les électrodes de mesure sont situées dans le milieu.

La seule présence d'électrodes de mesure n'est en effet pas suffisante pour réaliser un capteur capacitif pouvant fournir un signal duquel le niveau de liquide peut être directement dérivable, quand la constante diélectrique du liquide n'est pas *a priori* connue ou quand elle est variable, due à des variations de sa température ou de sa composition par exemple. Il est nécessaire de disposer des électrodes additionnelles, appelées électrodes de référence ou de compensation, de préférence dans le fond du réservoir contenant le liquide, de manière à pouvoir obtenir en permanence une mesure indépendante du niveau du liquide mais fonction de sa constante diélectrique.

Ce type de capteur capacitif à compensation, connu dans l'état de la technique, et dont les électrodes sont réalisés à la surface d'un support plat longitudinal de type ligne ruban de sorte que le champ électrique aux bornes des électrodes soit influencé principalement par le liquide, est efficace pour compenser en temps réel les changements des propriétés diélectriques du liquide dont il faut mesurer le niveau, tout en étant relativement peu coûteux. Ce type de capteur présente également une relative robustesse grâce à sa réalisation simple généralement en une pièce, en comparaison aux capteurs capacitifs à plaques planes parallèles ou à électrodes cylindriques coaxiales, nécessitant un agencement complexe d'armatures et d'entretoises pouvant gêner la mesure.

En outre, ce type de capteur ne nécessite aucune pièce mobile, contrairement par exemple à certains capteurs à flotteurs de l'état de la technique. Ces derniers capteurs sont souvent moins robustes par la présence des pièces mobiles, sujettes à l'usure et aux chocs.

Malgré leurs avantages, les capteurs capacitifs de l'état de la technique n'offrent cependant pas une précision suffisante pour certaines applications notamment parce que le signal fourni par les électrodes de référence est dans la pratique sensiblement influencé par le niveau du liquide. Cette influence indésirable est due à la configuration des capteurs de l'état de la technique dans lesquels la piste d'alimentation des électrodes de référence est souvent longue, disposée le long des électrodes de mesure et constitue ainsi une capacité additionnelle.

**Résumé de l'invention**

Un but de l'invention est de fournir un capteur capacitif offrant une meilleure précision de mesure à coût de fabrication égal. En outre, un objet additionnel de l'invention est de fournir un capteur plus compact.

A cette fin, le capteur selon l'invention est caractérisé en ce que le support inclut au moins trois couches; et la paire de référence est liée à au moins une piste de connexion située dans une couche intérieure du support et liée aux moyens de connexion.

Le capteur selon l'invention résout de manière originale le problème de l'influence indésirable de la piste de connexion menant des électrodes de référence aux moyens de connexion sur le signal obtenu par la paire de référence. En effet, les capteurs de l'état de la technique ne font soit rien pour pallier cette influence indésirable, soit utilisent un anneau de garde, comme par exemple le dispositif de la demande de brevet français FR 2 647 898, ou des bandes à la masse, comme par exemple dans le capteur de la demande internationale WO 99/10714 (ce qui améliore certes la précision de la mesure de niveau, mais ne supprime pas suffisamment l'influence des champs électriques parasites et créent encore une erreur de mesure non négligeable), soit encore des dispositions ou structures de pistes complexes associées à des systèmes électroniques de compensation adaptés.

Le capteur selon l'invention inclut une piste de connexion ne se trouvant pas sur la surface où les branches d'électrodes se trouvent, mais dans une couche intérieure du support, grâce à l'utilisation d'un support longitudinal, substantiellement plat et multicouche. De cette manière, la piste de connexion ne côtoie pas directement le liquide et est suffisamment isolée de la partie du réservoir où la variation du niveau du liquide est mesurée, et la capacité mesurée aux bornes de la paire de référence est dépendante de la constante diélectrique du liquide, et substantiellement indépendante de son niveau, lorsque la paire de référence est totalement immergée bien entendu.

En d'autres termes, une séparation spatiale est opérée entre les pistes opérationnelles de la paire de référence, permettant la mesure capacitive de la constante diélectrique du liquide, et la piste de connexion, permettant l'alimentation de la paire de référence et la transmission du signal, en ce sens que cette dernière n'est pas placé sur la surface où se situent les premières.

Grâce à l'isolation de la piste de connexion à l'intérieur même du support multicouche, la précision de la mesure de la constante diélectrique du liquide est meilleure pour un coût constant, et la mesure du niveau du liquide est également plus précise pour un coût de fabrication constant.

En outre et comme avantage supplémentaire, la surface qui est occupée par la piste de connexion dans un capteur de l'état de la technique, tel celui divulgué dans le brevet américain US 4,296,630, est d'une certaine manière libérée sur le support du capteur selon l'invention et peut être utilisée notamment dans celui-ci soit pour réduire la taille du support et donc son coût, soit pour augmenter le nombre de branches interdigitées de la paire de mesure et ainsi augmenter la précision de la mesure.

Il faut noter que la partie proximale, la partie centrale et la partie distale du support du capteur selon l'invention peuvent être, selon un premier mode de réalisation, respectivement destinés à être placés dans une partie haute, une partie centrale et une partie du basse du réservoir, ou, selon un deuxième mode de réalisation, respectivement destinés à être placés dans une partie basse, une partie centrale et une partie du réservoir haute. Selon le premier mode, la paire de référence est ainsi disposée dans la partie basse du support, et, selon le deuxième mode, la paire de référence est en revanche disposée dans la partie haute du support. Dans le capteur selon ce dernier mode, la paire de référence est utilisée non pas pour mesurer la constante diélectrique du liquide, mais par exemple pour mesurer la constante diélectrique du gaz ou de l'air au-dessus du liquide, ou pour engendrer un signal d'alerte lors d'un dépassement d'un niveau de liquide donné, pour des raisons de sécurité.

Selon ces deux modes de réalisations du capteur selon l'invention, la piste de connexion liant les moyens de connexion à la paire de référence passe par une couche intérieure du support dans sa partie centrale.

Un autre objet de l'invention est de fournir un capteur de niveau tel que décrit ci-dessus, destiné à produire une mesure peu ou pas sensible aux variations des propriétés diélectriques du ou des matériaux formant le support.

A cette fin, selon un mode particulier de réalisation de l'invention, la couche intérieure du capteur inclut au moins une piste à la masse, séparée de la piste de connexion par un premier diélectrique, destinée à former une capacité additionnelle de manière à compenser au moins partiellement des variations de la constante diélectrique des matériaux formant le support.

En opération, la constante diélectrique du ou des matériaux formant le support varie ou est susceptible de varier en fonction de température. Cette variation peut corrompre significativement la mesure de capacité obtenue aux bornes de la paire de mesure, puisqu'une partie du champ électrique formé aux bornes de cette paire passe par le support. Il existe donc un besoin de connaître la manière selon laquelle la capacité aux bornes de la paire de mesure varie en fonction de la température notamment, de façon à compenser ces variations.

Le capteur selon la réalisation particulière de l'invention présente au moins une piste à la masse, disposée par exemple dans une couche intérieure du support. En mesurant la capacité formée entre une des électrodes de la paire de mesure et cette piste à la masse, il est possible de détecter au cours du temps les variations de la constante diélectrique du matériau formant le support. Il est ainsi possible de tenir compte de ces variations de constante diélectrique, et de la capacité de structure correspondante, afin de compenser la mesure de la capacité formée aux bornes de la paire de mesure et d'obtenir enfin une mesure plus précise du niveau du liquide.

Un autre objet de l'invention est de fournir un capteur comme décrit ci-dessus, dont les branches de la paire de mesure sont substantiellement protégées contre l'oxydation et ne sont pas tributaires d'éventuelles particules conductrices ou conglomérats de particules conductrices, provenant d'impuretés du liquide, susceptibles de s'insérer entre deux branches des électrodes contiguës, de court-circuiter les électrodes de la paire de mesure et de rendre nettement plus difficile voire impossible la production d'une mesure précise de capacité et de niveau.

A cette fin, selon un mode particulier de réalisation de l'invention, le capteur est caractérisé en ce que les branches de la paire de mesure sont recouvertes d'une couche protectrice, par exemple composé d'un ou plusieurs élément de type vernis ou résine polymérique, de préférence neutre par rapport au liquide, et en ce que la couche intérieure inclut une piste additionnelle parallèle à la piste de connexion et séparée de celle-ci par un deuxième diélectrique de nature similaire à celui utilisé pour la couche protectrice, destiné à former une capacité additionnelle de manière à compenser au moins partiellement des variations de la constante diélectrique des matériaux formant la couche protectrice.

De cette manière, la capacité entre la piste de connexion et la piste additionnelle peut être calculée et les variations au cours du temps de cette capacité, représentative des variations en fonction de la température et au cours du temps de la constante diélectrique des matériaux formant la couche protectrice, peuvent être judicieusement prises en compte pour compenser la mesure de la capacité formée aux bornes de la paire de mesure, et obtenir une mesure plus précise du niveau du liquide. Cette prise en compte et cette compensation sont possibles parce que le raisonnement sous-jacent à cette réalisation revient à rajouter une équation et une inconnue en plus, la constante diélectrique des matériaux formant la couche protectrice, au système d'équations qui peut être implicitement ou explicitement résolu dans le capteur selon l'invention.

L'invention concerne en outre un réservoir incluant un tel capteur, par exemple un réservoir de carburant pour véhicule automobile, un domaine d'application soumis à des contraintes de précisions et de coûts très exigeantes.

## Brève description des figures

Ces aspects ainsi que d'autres aspects de l'invention seront clarifiés dans la description détaillée de modes de réalisation particuliers de l'invention, référence étant faite aux dessins des figures, dans lesquelles :

Fig. 1 montre une vue schématique d'une réalisation particulière du capteur selon l'invention;

Fig. 2 à 4 montrent des vues schématiques d'autres réalisations particulières du capteur selon l'invention;

Fig. 5 montre une vue transversale en coupe de la partie centrale du support d'une réalisation particulière du capteur selon l'invention;

Fig. 6 montre une vue transversale en coupe de la partie centrale du support d'une réalisation particulière du capteur selon l'invention, dans lequel des électrodes sont présentes des deux côtés du support;

Fig. 7 et 8 montrent des vues transversales en coupe de la partie centrale du support de deux réalisations particulières du capteur selon l'invention;

Fig. 9 montre un circuit électronique équivalent pour illustrer le fonctionnement d'une réalisation particulière du capteur selon l'invention;

Fig. 10 montre une vue transversale en coupe de la partie centrale du support d'une réalisation particulière du capteur selon l'invention, dans lequel une couche protectrice est notamment incluse et un système de compensation de l'effet capacitif de celle-ci;

Fig. 11 à 13 montrent des vues schématiques de trois autres réalisations particulières du capteur selon l'invention;

Fig. 14 et 15 montrent des vues schématiques en coupe de deux réalisations particulières du réservoir selon l'invention;

Fig. 16 et 17 montrent des vues schématiques de profil de deux réalisations particulières du capteur selon l'invention; et

Fig. 18 montre une vue schématique en coupe d'une autre réalisation particulière du capteur selon l'invention.

Les figures ne sont pas dessinées à l'échelle.
Généralement, des éléments semblables sont dénotés par des références semblables dans les figures.

## Description détaillée de modes de réalisation particuliers

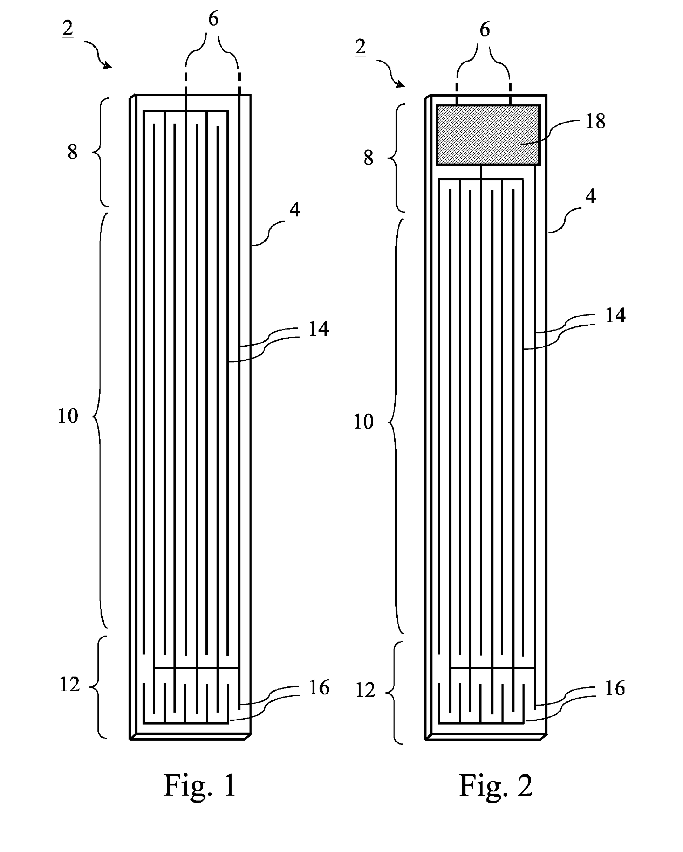

La Fig. 1 montre une vue schématique d'une réalisation particulière du capteur 2 selon l'invention, sur laquelle est illustrée la présence d'électrodes sur un support 4 du capteur 2. Deux paires d'électrodes sont représentées sur le support, ces deux paires ayant une électrode en commun. Les trois électrodes sont chacune constituées de branches parallèles formant ensemble des peignes interdigités ou imbriqués. Dans les parties proximale 8 et centrale 10 du support 4 est disposée la paire de mesure 14 et dans la partie distale 12 est disposée la paire de référence 16.

Une des deux électrodes de la paire de référence 16, et plus précisément l'électrode non commune à la paire de mesure 14, est liée aux moyens de connexion 6 par une piste de connexion 26 non représentée, et située dans une couche intérieure 24 du support 4. Cette piste de connexion 26, ou piste d'alimentation, est liée à la paire de référence 16 par une connexion traversant la couche isolante 20.

La paire de référence 16 est destinée en opération à être située sous la paire de mesure 14 et a être totalement immergée dans le liquide 54 du réservoir 48. La mesure n'est considérée comme valide que si cette paire de référence 16 est totalement immergée.

Dans la réalisation particulière illustrée à la Fig. 1, la hauteur de la paire de référence 16 est largement inférieure à celle de la paire de mesure 14. Ceci permet de mesurer le niveau 52 de liquide 54 sur une hauteur utile significative.

Toujours dans la réalisation particulière illustrée à la Fig. 1, les branches de la paire de mesure 14 sont orientées dans le sens de la longueur du support 4. Cette disposition présente l'avantage d'offrir une variation continue de la capacité aux bornes de la paire de mesure 14 en réponse à une variation du niveau 52 du liquide 54 dans le réservoir 48, du moins notamment si le support 4 est disposée verticalement dans le réservoir 48, c'est-à-dire si la partie proximale 8 est disposée dans le haut du réservoir 48 et la partie distale 12 dans le bas du réservoir 48. Une paire de mesure 14 qui présenterait des branches orientées dans le sens de la largeur du support 4 engendrerait une relation, entre la capacité aux bornes de la paire 14 et le niveau 52 de liquide 54, nettement moins linéaire, et plus précisément présentant des à-coups.

En outre, la disposition verticale des branches des deux paires permet une uniformité de fabrication, car elles peuvent être fabriquées ensemble simultanément et sur le même support 4. Une identité substantielle des caractéristiques et de la géométrie des électrodes et des diélectriques entre celles-ci est ainsi observée. Cette homogénéité contribue à l'amélioration de la précision.

La Fig. 2 montre une vue schématique d'une autre réalisation particulière du capteur 2 selon l'invention, similaire à la réalisation particulière illustrée à la Fig. 1, mais comprenant en outre un circuit électronique d'évaluation 18 disposé sur le support 4. Le circuit électronique d'évaluation 18 a notamment pour but de réaliser, par combinaison de la valeur de capacité obtenue aux bornes de la paire de mesure 14 et de celle obtenue aux bornes de la paire de référence 16, la compensation électronique des variations de la constante diélectrique du liquide 54.

Disposer le circuit électronique 18 à l'extérieur du réservoir 48 constitue un mode particulier de réalisation du capteur 2 selon l'invention, représenté à la Fig.1. Toutefois, la qualité des signaux obtenus aux bornes des paires d'électrodes 14, 16 est meilleure quand ce circuit 18 se trouve sur le support 4 lui-même, comme représenté sur la Fig. 2. En effet, au plus les paires d'électrodes 14, 16 sont proches du dispositif de traitement du signal, analogique à la source, au moins le signal est corrompu et au plus précise est la mesure.

Une fois le traitement électronique réalisé dans le circuit d'évaluation 18, le signal analogique est transformé, selon un mode particulier de l'invention, en un signal digital dont la qualité est nettement moins sensible au transport. Selon un autre mode de réalisation particulier, le signal analogique est transformé en un autre signal analogique, dont la sensibilité peut être avantageusement faible, par un choix judicieux des propriétés de ce signal, en particulier de son amplitude.

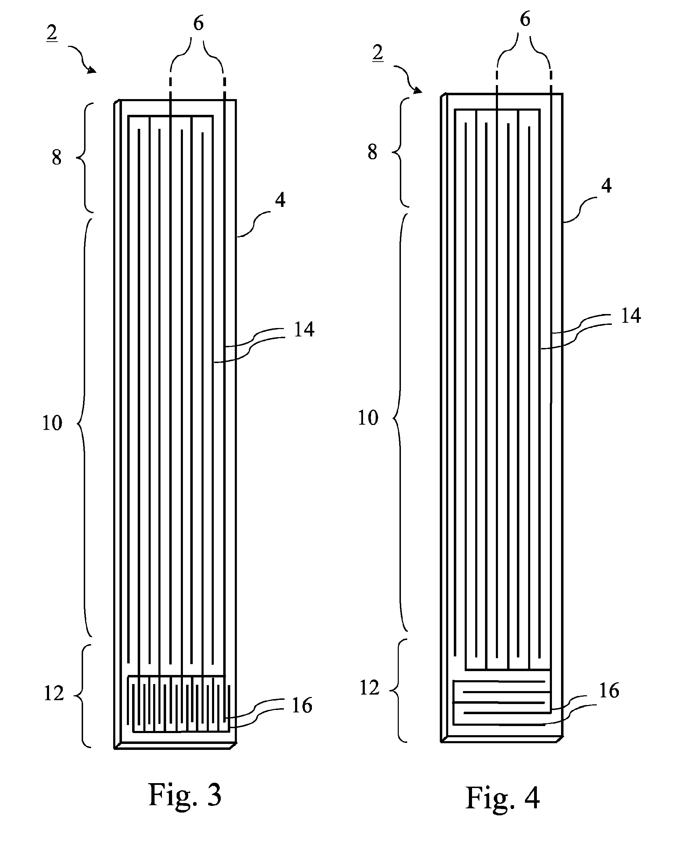

La Fig. 3 montre une vue schématique d'une autre réalisation particulière du capteur 2 selon l'invention, similaire à la réalisation particulière illustrée à la Fig. 1, mais dans lequel les branches contiguës de la paire de référence 16 sont séparées l'une de l'autre par une distance plus courte que la distance séparant l'une de l'autre les branches contiguës de la paire de mesure 14. Cette disposition présente l'avantage d'augmenter la capacité aux bornes de la paire de référence 16 sans augmenter les dimensions extérieures de la partie du capteur 2 où est disposée la paire de référence 16. Ainsi, les capacités parasites sont plus faibles en valeur relative par rapport à la capacité obtenue aux bornes de la paire de référence 16, ce qui conduit à une meilleure précision de mesure.

Selon un mode particulier de réalisation de l'invention, les branches de la paire de référence 16 sont disposées transversalement au support 4, comme illustré sur la Fig. 4.

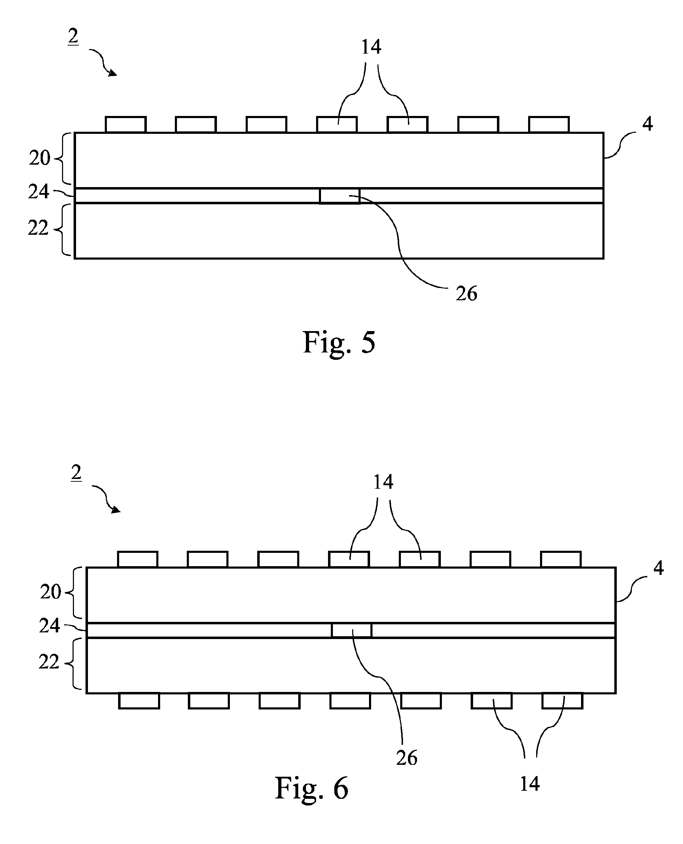

La Fig. 5 montre une vue transversale en coupe du support 4 d'une réalisation particulière du capteur 2 selon l'invention. La coupe est réalisée dans le support 4 en sa partie centrale 10, c'est-à-dire que les branches des électrodes montrées en surface sont les branches de la paire de mesure 14. Le support 4 représenté inclut trois couches dont une première couche isolante 20 sur laquelle sont disposées les paires de mesure 14 et de référence 16 (ces dernières ne sont pas visibles en cette partie du support 4), une deuxième couche isolante 22, et la couche intérieure 24, située entre la première couche isolante 20 et la deuxième couche isolante 22.

Les branches des électrodes des paires peuvent par exemple être de 70 microns de hauteur sur 200 microns de largeur, ce qui permet d'obtenir un effet « condensateur plan » plus important que les effets de bords, qui jouent toutefois également un rôle.

La piste de connexion 26 est située dans la couche intérieure 24 du support 4 et est de cette manière physiquement isolée du liquide 54.

Les couches isolantes 20 et 22 sont en substrat non-conducteur. La couche intérieure 24 est également constituée d'un matériau diélectrique, du moins autour de la piste de connexion 26 conductrice. De cette manière, la piste de connexion 26 isolée n'engendre pas de capacité additionnelle dépendant de façon significative du niveau 52 du liquide 54. La piste de connexion 26 peut engendrer une légère capacité additionnelle parasite, mais celle-ci est négligeable au regard de la valeur de la capacité aux bornes de la paire de référence 16. Il est néanmoins important que la distance séparant la piste de connexion 26 du bord latéral du support 4 soit suffisamment importante pour que l'influence du champ électrique passant par le liquide soit négligeable. La piste de connexion 26 peut par exemple être disposée à distance égale ou substantiellement égale des deux bords latéraux du support 4.

A titre d'exemple encore, pour une tension de 5 volts appliquées à la fois aux bornes de la paire de mesure 14 et aux bornes de la paire de référence 16, il est observé qu'une distance de 400 micromètres est suffisante pour éviter un effet parasite significatif du champ électrique sur la mesure.

La Fig. 6 montre une vue transversale en coupe du support 4 d'une autre réalisation particulière du capteur 2 selon l'invention. Dans celle-ci, les deux paires d'électrodes sont dédoublées des deux côtés du support 4 de manière à augmenter la valeur des capacités mesurées et augmenter ainsi la sensibilité de capteur 2, par diminution relative des capacités parasites. Selon un mode particulier de réalisation du capteur 2 selon l'invention, les électrodes des paires respectives dédoublées sont reliées avant d'atteindre les moyens de connexion 6 ou le circuit électronique d'évaluation 18.

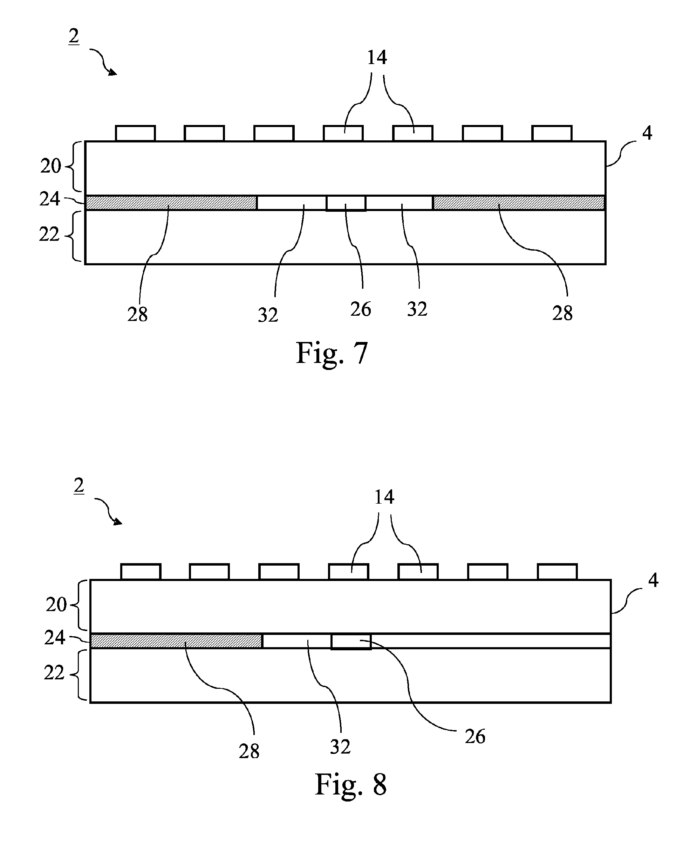

Les Fig. 7 et 8 montrent des vues transversales en coupe du support 4 de deux réalisations particulières du capteur 2 selon l'invention, dans lesquelles soit une ou deux pistes à la masse 28 sont présentes dans la couche intérieure 24, respectivement soit d'un côté de la piste de connexion 26, soit de part et d'autre de la piste de connexion 26. Comme expliqué plus haut, cette disposition permet de réaliser une compensation des variations de constante diélectrique du ou des matériaux constituant le support 4. Le premier diélectrique 32 peut par exemple être de la même nature que le matériau formant la couche électriquement isolante 20 ou la couche isolante 22.

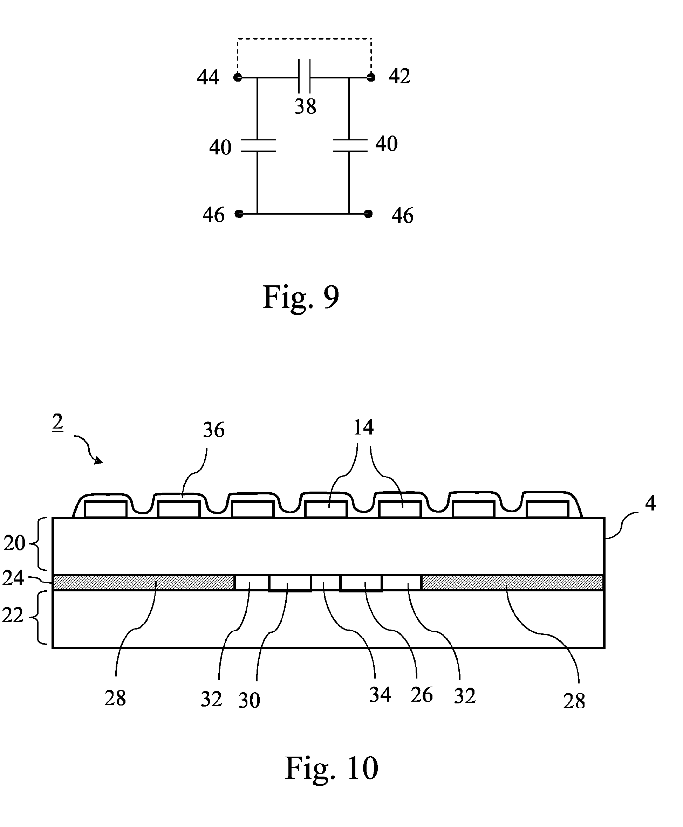

La Fig. 9 montre un circuit équivalent simplifié aux fins d'illustrer comment il est possible de mesurer l'influence du diélectrique constituant la couche isolante 20, sur laquelle sont disposées les branches de la paire de mesure 14.

La capacité 38 représente la capacité formée par les deux électrodes de la paire de mesure 14. La borne 42 correspond à la borne de la première électrode de la paire de mesure 14, cette borne 42 étant par exemple la borne commune 42 appelée *COM*, commune à la paire de mesure 14 et à la paire de référence 16. La borne 44 correspond à la borne de la seconde électrode de la paire de mesure 14, cette borne 44 étant par exemple la borne de mesure appelée *CMES,* spécifique à la paire de mesure 14. Une mesure de la capacité entre les bornes 42 et 44 permet de calculer la capacité aux bornes de la paire principale, soit la paire de mesure 14, soit la paire de référence 16.

Les deux bornes 46 correspondent aux pistes à la masse 28. En court-circuitant les bornes 42 et 44, c'est-à-dire les deux électrodes de la paire de mesure 14, il est possible de mesurer la capacité 40, dite capacité de structure, qui dépend principalement de la constante diélectrique du ou des matériaux constituant la couche isolante 20. La connaissance de cette capacité peut être prise en compte pour compenser l'influence des variations de diélectrique sur la mesure de la capacité principale.

La Fig. 10 montre une vue transversale en coupe du support 4 d'une réalisation particulière du capteur 2 selon l'invention, dans lequel une couche protectrice 14 est présente avec un système de compensation de l'effet capacitif de celle-ci. Une piste additionnelle 30 est présente dans la couche intérieure 24, parallèlement à la piste de connexion 26. Ces deux pistes 26, 30 sont séparées par un deuxième diélectrique 34, de même nature que le matériau formant la couche protectrice 36.

La mesure de la capacité aux bornes de la piste de connexion 26 et de la piste additionnelle 30 permet donc de mesurer les variations de celle-ci, et les variations au cours du temps de la constante diélectrique du ou des matériaux formant la couche protectrice 36. Cette mesure peut alors être reportée dans la compensation lors du calcul du niveau 52 de liquide 54.

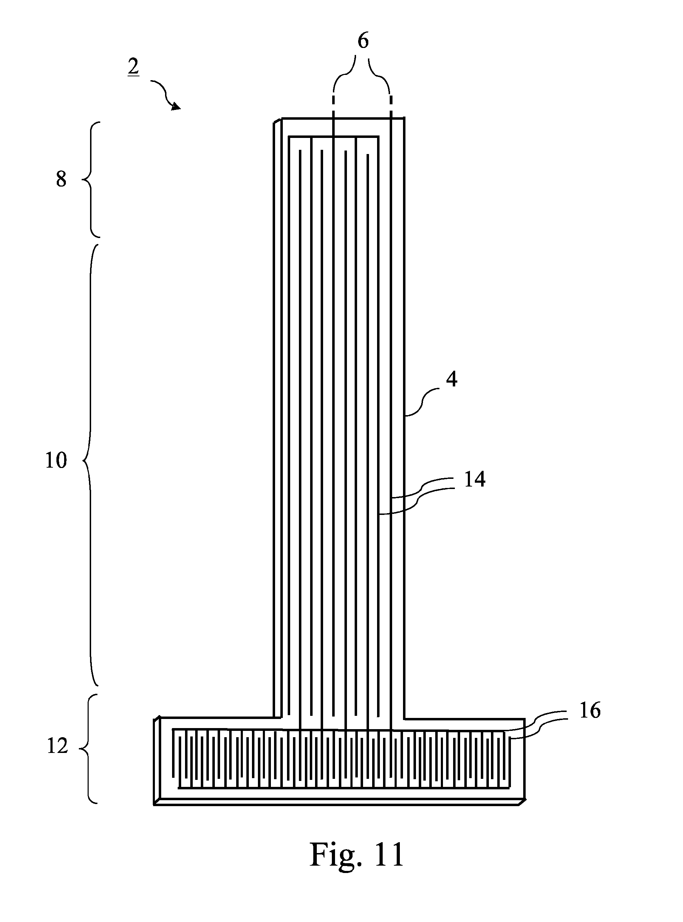

La Fig. 11 montre une vue schématique d'une autre réalisation particulière du capteur 2 selon l'invention, dans lequel la partie distale 12 est plus large que la partie centrale 10. Dans cette réalisation particulière, la largeur sur laquelle la paire de référence s'étend est plus importante. Selon la conception du capteur, la surface réservée à la paire de référence 16 peut alors être plus importante, d'où une meilleure sensibilité, ou la hauteur de celle-ci peut être plus petite à surface constante, pour rester dans le liquide 54 à niveau 52 plus bas.

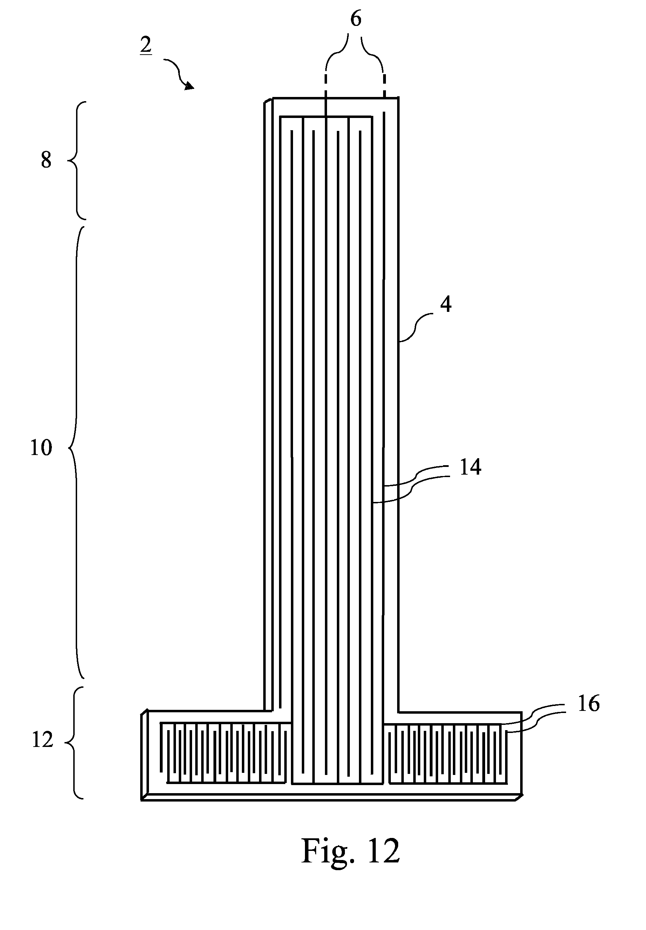

La Fig. 12 montre une vue schématique d'une autre réalisation particulière du capteur 2 selon l'invention, dans lequel la paire de mesure 14 est placée au moins dans les parties centrale 10 et distale 12; et la paire de référence 16 est placée de part et d'autre de la paire de mesure 14. Le capteur 2 selon cette réalisation particulière présente l'avantage de permettre une mesure sur toute la hauteur du réservoir 48, même pour des valeurs très faibles de niveau 52. Il est à noter néanmoins que dans ce cas la valeur du niveau 52 n'est pas compensée ou correctement compensée quand le niveau 52 du liquide 54 ne couvre pas complètement la paire de référence 16. Toutefois, l'absence de compensation pour des valeurs faibles de niveau 52 est peu préjudiciable dans de nombreux types d'applications, dans lesquelles, pour des niveaux très faibles, il est souvent possible de se contenter d'une mesure moins précise.

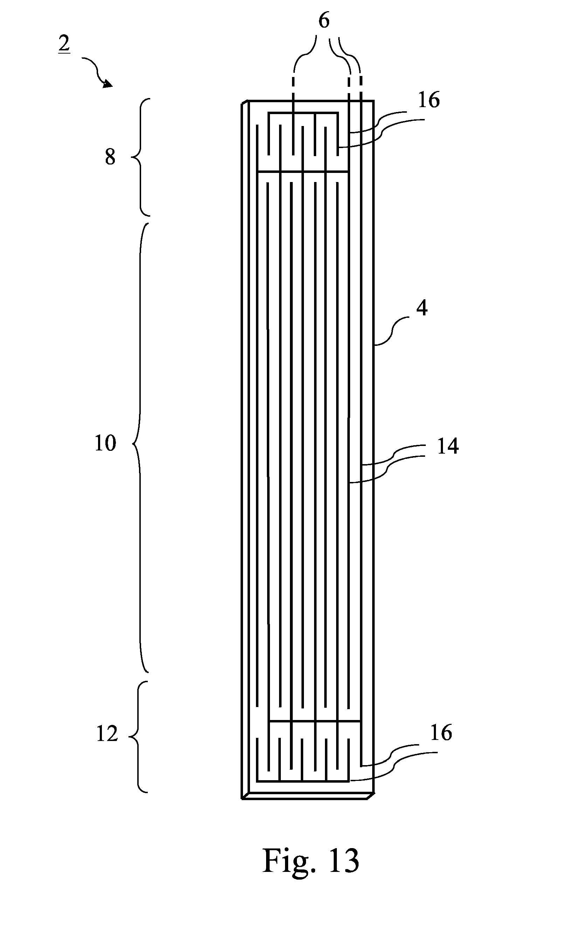

La Fig. 13 une vue schématique d'une autre réalisation particulière du capteur 2 selon l'invention, dans lequel le support 4 inclut une paire de référence 16 supplémentaire dans la partie proximale 8. En opération, la paire de référence 16 supplémentaire est toujours en dehors du liquide 54, en particulier au-dessus de celui-ci, alors que la première paire de référence 16 est en permanence immergée. Ce mode de réalisation particulière présente deux avantages.

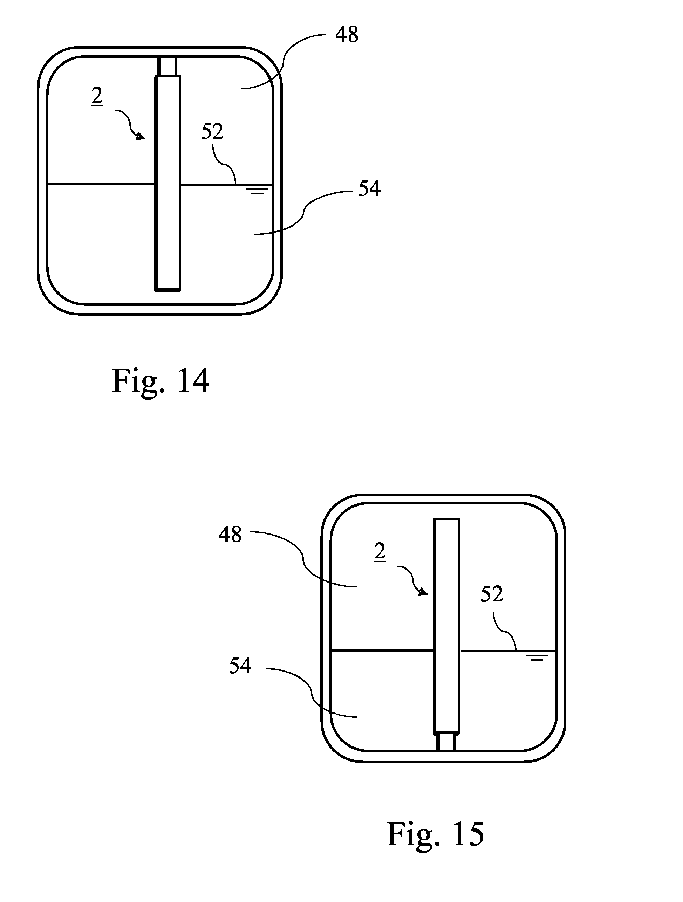

Le premier est la possibilité que le capteur 2 soit utilisé pour une mesure avec moyens de connexion 6 par le haut du réservoir 48, comme représenté sur la Fig. 14, ou par le bas, comme représenté sur la Fig. 15, la fixation du capteur 2 étant dans ce dernier cas en dessous (représenté sur la Fig. 15) ou/et au-dessus du capteur 2 (non représenté). L'introduction du capteur 2 par le dessous du réservoir 48 est possible par un choix correspondant à la disposition de la Fig. 15 par exemple.

Le second avantage est une possibilité d'accroître la sécurité dans le cas d'un réservoir 48 de carburant transporté par un véhicule par exemple, en permettant la détection d'un retournement de véhicule, et en permettant ainsi l'enclenchement de la fermeture des vannes du réservoir 48 de carburant 54, ce qui est critique dans le cas d'un carburant GPL par exemple. Selon un mode de réalisation, en opération et lorsque est détectée une valeur inhabituelle de capacité sur paire de référence 16 supplémentaire, il est émis un signal d'actionnement de l'électrovanne de la fermeture du système GPL, ce qui permet ainsi de couper toute arrivée du GPL au moteur.

Les Fig. 14 et 15 montrent des vues schématiques en coupe de deux réalisations particulières du réservoir 48 selon l'invention, dans lesquelles les moyens de connexion 6 sont respectivement disposées dans le haut et le bas du réservoir 48. Le capteur 2 représenté sur la Fig. 15 présente, selon un mode de réalisation particulier, deux paires de référence 16, l'une dans la partie distale 12 et l'autre dans la partie proximale 8.

Le réservoir 48 représenté aux Fig. 14 et 15 est dessiné schématiquement sans les conduits d'alimentation et/ou d'évacuation ou aspiration, par simplification. Il sera clair pour l'homme du métier que ces conduits sont nécessaires pour le bon fonctionnement du réservoir 48 selon l'invention.

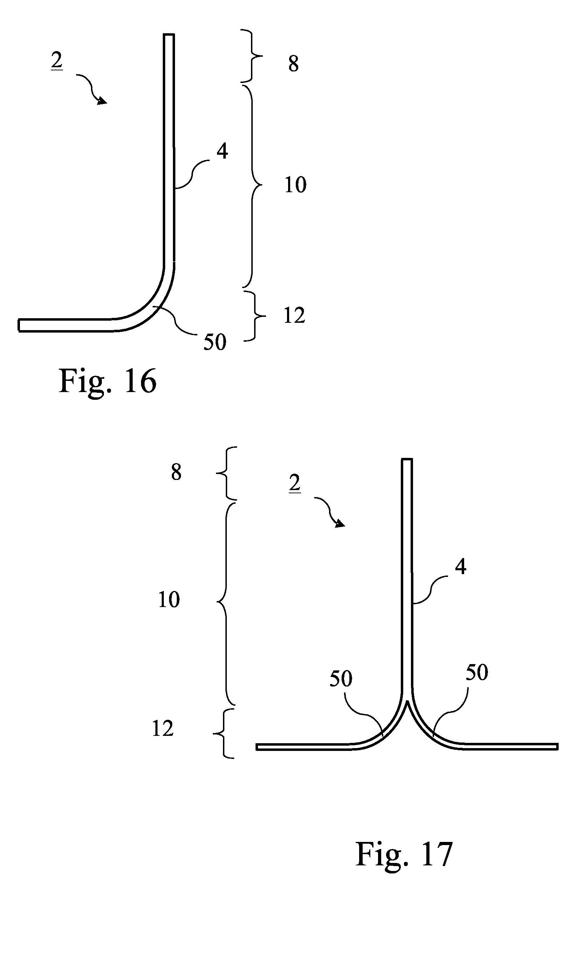

La Fig. 16 montre une vue schématique de profil d'une réalisation particulière du capteur 2 selon l'invention, dans lequel le support 4 présente un coude 50 de sorte que la paire de référence 16 est disposée horizontalement dans le fond du réservoir 48. L'utilisation d'un support 4 suffisamment fin permet de plier celui-ci de manière à obtenir une forme en « L ». Ce mode de réalisation particulier permet de mesurer le niveau 52 du liquide 54 jusque pratiquement dans le fond du réservoir 48 et avec une très grande précision. Le support 4 peut à titre d'exemple être fabriqué avec une épaisseur inférieure à 400 micromètres.

Une disposition en « T » comme représentée sur la Fig. 17 est aussi possible. Les électrodes y sont disposées sur les deux faces du support 4 et le support 4 inclut avantageusement une pluralité de couches isolantes, de manière à réaliser aisément une division en « T » avec deux coudes 50.

Un autre avantage des réalisations particulières représentées aux Fig. 16 et 17 est la possibilité de détecter, dans le cas d'un réservoir 48 de carburant, la présence dans les carburants d'eau par exemple, de manière à prévenir le conducteur et ne pas endommager le moteur.

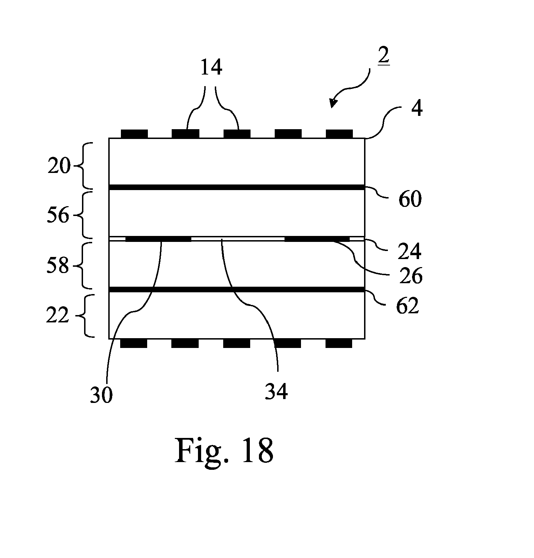

La Fig. 18 montre une représentation schématique en coupe d'une réalisation particulière alternative du capteur 2 selon l'invention. Le support 4 présente sept couches successives: une première couche isolante 20 sur laquelle sont disposées les branches des électrodes, une sixième couche conductrice 60 constituée d'un plan à la masse, une quatrième couche isolante 56, la couche intérieure comprenant notamment la piste de connexion 26 et une piste additionnelle 30, une cinquième couche isolante 58, une septième couche conductrice 62 également constituée d'un plan à la masse et une deuxième couche isolante 22 sur laquelle sont disposées d'autres branches des électrodes.

Les données suivantes ont été observées pour cette réalisation particulière:

$$C_{ref0} = 4,017 \text{ pF}$$

$$C_{ref, 0\%} = 6,266 \text{ pF}$$

$$C_{ref, 100\%} = 6,290 \text{ pF}$$

$$C_{ref, 0\%} - C_{ref0} = 2,249 \text{ pF}$$

$$C_{ref, 100\%} - C_{ref, 0\%} = 0,024 \text{ pF}$$

$$C_{mes0} = 83,89 \text{ pF} = C_{mes, 0\%}$$

$$C_{mes, 100\%} = 133,43 \text{ pF}$$

$$C_{mes,\ 100\%} - C_{mes0} = 49,5\ \text{pF}$$

où $C_{ref0}$ est la capacité de la paire de référence 16 lorsque le réservoir 48 est complètement vide, $C_{ref,\ 0\%}$ est la capacité de la paire de référence 16 lorsque celle-ci est immergée mais que le niveau 52 est égal à 0, $C_{ref,\ 100\%}$ est la capacité de la paire de référence 16 lorsque le réservoir 48 est rempli, $C_{mes0}$ est la capacité de la paire de mesure 14 lorsque celle-ci n'est pas immergée et $C_{mes,\ 100\%}$ est la capacité de la paire de mesure 14 lorsque le réservoir 48 est rempli. Ce type de capteur selon l'invention donne des résultats très satisfaisants et démontrent l'indépendance substantielle de la capacité de la paire de référence 16 par rapport au niveau 52 du liquide 54. Les couches conductrices 60 et 62 peuvent par exemple être des couches de cuivre, constituant des plans de masse.

Il sera clair pour l'homme du métier que la capteur 2 dans le contexte de l'invention peut être une sonde, un détecteur, un appareil de mesure ou encore un dispositif permettant de détecter en vue de le représenter un phénomène physique sous la forme d'un signal, par exemple électrique, ou constituer une partie d'un tel système.

Il sera en outre clair pour l'homme du métier que, bien que la capteur 2 est appelé capteur capacitif, des effets éventuellement inductifs et/ou résistifs peuvent également jouer un rôle, surtout à fréquence d'échantillonnage élevée.

Il sera en outre clair pour l'homme du métier que le capteur 2 est un capteur 2 de niveau 52, dans le sens d'une une hauteur ou d'un degré d'élévation, que le fond du réservoir 48 soit plat ou non, et qu'il peut s'agir d'un appareil de mesure d'un volume de remplissage d'un réservoir 48.

Il sera en outre clair pour l'homme du métier que le liquide 54 peut être du carburant (par exemple de l'essence, du gazole, du GPL ou LNG), ou tout autre liquide, ou encore des solides granuleux ayant des propriétés similaires à celles d'un liquide 54 (propriétés d'écoulement), comme les grains d'un silo à grain, ou un réservoir de sable. De même, le réservoir 48 peut par exemple être un réservoir d'un véhicule automobile, d'un avion, d'un bateau ou un bassin ou récipient.

Il sera en outre clair pour l'homme du métier que le support 4 longitudinal et substantiellement plat peut être une nappe de conducteur, un circuit imprimé, par exemple multicouche, ou plus généralement un substrat électriquement isolant. Le support 4 peut présenter un ou des coudes, tant que la surface du support 4 est localement plane. Selon un mode de réalisation, les électrodes sont dessinées sur le support 4 par photolithographie.

En outre, l'homme du métier reconnaîtra que les moyens de connexion constituent l'alimentation en énergie électrique et en particulier en tension pour la transmission d'un signal.

Les branches interdigitées, de préférence parallèles, sont des peignes imbriqués ou interdigités, de manière à augmenter la surface de détection et la sensibilité, ou en d'autres termes présentent des dents parallèles.

La couche de protection 36 des électrodes peut être constituée d'un vernis. Par son choix judicieux, il est possible de modifier les angles de mouillage des liquides par rapport à la surface du support 4 et d'optimiser l'écoulement du liquide 54 le long de celui-ci. Tout moyen adapté de conversion de la partie superficielle des électrodes, comme le traitement de surface par exemple par oxydation contrôlée, peut également être utilisé.

La présente invention n'est pas limitée par ce qui est en particulier illustré dans les dessins et par ce qui est en particulier décrit ci-dessus. Les références dans les revendications ne limitent l'étendue de la protection.

## Revendications

**1.** Capteur (2) capacitif de niveau (52) d'un liquide (54) d'un réservoir (48), incluant

un support (4) longitudinal et substantiellement plat, destiné à être disposé dans le réservoir (48), le support (4) incluant

une partie proximale (8), une partie centrale (10) et une partie distale (12); et
des moyens de connexion (6), situés dans la partie proximale (8), pour connecter électriquement le support (4) et l'extérieur du support (4);

une première paire d'électrodes, dite paire de mesure (14), incluant des branches interdigitées et disposées sur le support (4) au moins dans sa partie centrale (10); et
une deuxième paire d'électrodes, dite paire de référence (16), incluant des branches interdigitées et disposées sur le support (4) dans sa partie distale (12);

**caractérisé en ce que**

le support (4) inclut au moins trois couches; et
la paire de référence (16) est liée à au moins une piste de connexion (26) située dans une couche intérieure (24) du support (4) et liée aux moyens de connexion (6).

2. Capteur (2) selon la revendication 1, dans lequel les au moins trois couches du support (4) incluent
une première couche isolante (20) sur laquelle sont placées les paires de mesure (14) et de référence (16) ;
une deuxième couche isolante (22); et la couche intérieure (24), située entre la première couche isolante (20) et la deuxième couche isolante (22).

3. Capteur (2) selon la revendication 2 dans lequel les au moins trois couches du support (4) incluent en outre
une quatrième (56) et une cinquième (58) couches isolantes, situées de par et d'autre de la couche intérieure (24); et
une sixième (60) et une septième (62) couches conductrices destinées à être mises à la masse et respectivement situées entre la quatrième couche isolante et la première couche isolante (20) et entre la cinquième couche isolante et la deuxième couche isolante (22).

4. Capteur (2) selon l'une quelconque des revendications précédentes, dans lequel les branches de la paire de mesure (14) sont orientés dans le sens de la longueur du support (4).

5. Capteur (2) selon l'une quelconque des revendications précédentes, dans lequel les branches contiguës de la paire de référence (16) sont séparées l'une de l'autre par une distance plus petite que celle séparant l'une de l'autre les branches contiguës de la paire de mesure (14).

6. Capteur (2) selon l'une quelconque des revendications précédentes, incluant une paire de référence (16) supplémentaire dans la partie proximale (8).

7. Capteur (2) selon l'une quelconque des revendications précédentes, dans lequel la partie distale (12) est plus large que la partie centrale (10).

8. Capteur (2) selon la revendication 7, dans lequel
la paire de mesure (14) est placée au moins dans les parties centrale (10) et distale (12); et
la paire de référence (16) est placée de part et d'autre de la paire de mesure (14).

9. Capteur (2) selon l'une quelconque des revendications précédentes, dans lequel la couche intérieure (24) inclut au moins une piste à la masse (28), séparée de la piste de connexion (26) par un premier diélectrique (32), destinée à former une capacité additionnelle de manière à compenser au moins partiellement des variations de la constante diélectrique des matériaux formant le support (4).

10. Capteur (2) selon l'une quelconque des revendications précédentes,
dans lequel les branches de la paire de mesure (14) sont recouvertes d'une couche protectrice (36); et
dans lequel la couche intérieure (24) inclut une piste additionnelle (30) parallèle à la piste de connexion (26) et séparée de celle-ci par un deuxième diélectrique (34) de nature similaire à celui utilisé pour la couche protectrice (36), destinée à former une capacité additionnelle de manière à compenser au moins partiellement des variations de la constante diélectrique des matériaux formant la couche protectrice (36).

11. Réservoir (48) incluant un capteur (2) selon l'une quelconque des revendications précédentes.

Fig. 1

Fig. 2

Fig. 3

Fig. 4

2

14

4

20

24

22

26

Fig. 5

2

14

4

20

24

22

26

14

Fig. 6

2

14

20

24

22

28    32    26    32    28

Fig. 7

2

14

20

24

22

28    32    26

Fig. 8

4

4

**Fig. 9**

**Fig. 10**

Fig. 11

Fig. 12

Fig. 13

48

2

52

54

Fig. 14

48

2

52

54

Fig. 15

Fig. 16

Fig. 17

Fig. 18

**Office européen des brevets**

# RAPPORT DE RECHERCHE EUROPEENNE

Numéro de la demande

EP 04 10 6867

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | US 4 296 630 A (JUNG ET AL) 27 octobre 1981 (1981-10-27) * abrégé * * colonne 1, ligne 21 - ligne 51; figure 1 * * colonne 2, ligne 38 - ligne 66 * * colonne 5, ligne 45 - ligne 68 * | 1 | G01F23/26 |
| A | US 3 952 593 A (ELLS ET AL) 27 avril 1976 (1976-04-27) * colonne 2, ligne 1 - ligne 24 * * colonne 3, ligne 16 - colonne 4, ligne 68 * * colonne 9, ligne 32 - ligne 48 * * figure 6 * | 1-11 | |
| A | US 6 578 416 B1 (VOGEL STEVEN M ET AL) 17 juin 2003 (2003-06-17) * abrégé * * colonne 2, ligne 36 - ligne 53 * * colonne 4, ligne 33 - colonne 5, ligne 47 * * figure 2 * | 1,4,6 | |
| A | EP 1 435 512 A (ALUBO CO., LTD; KITAMURA, TERUO) 7 juillet 2004 (2004-07-07) * colonne 2, alinéa 7 - alinéa 9 * * colonne 15, alinéa 66 - colonne 16, alinéa 67 * * figures 14-16 * | 1 | |
| A | WO 99/10714 A (MILLENNIUM SENSORS LTD; NETZER, YOHAY; NETZER, YISHAY) 4 mars 1999 (1999-03-04) * abrégé * * page 5, ligne 25 - page 8, ligne 28 * * page 15, ligne 18 - page 19, ligne 14 * * page 21, ligne 29 - page 22, ligne 12 * * figure 7 * | 1,4,5 | |

**DOMAINES TECHNIQUES RECHERCHES (Int.Cl.7)**

G01F

Le présent rapport a été établi pour toutes les revendications

| Lieu de la recherche | Date d'achèvement de la recherche | Examinateur |
|---|---|---|
| Munich | 4 juillet 2005 | Pisani, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 10 6867

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-07-2005

| Document brevet cité au rapport de recherche | | Date de publication | Membre(s) de la famille de brevet(s) | | Date de publication |
|---|---|---|---|---|---|
| US 4296630 | A | 27-10-1981 | DE | 2908449 A1 | 18-09-1980 |
| | | | AU | 528173 B2 | 14-04-1983 |
| | | | AU | 5563580 A | 11-09-1980 |
| | | | FR | 2451024 A1 | 03-10-1980 |
| | | | GB | 2046918 A ,B | 19-11-1980 |
| | | | IT | 1140730 B | 01-10-1986 |
| | | | JP | 55119018 A | 12-09-1980 |
| | | | JP | 2017299 Y2 | 15-05-1990 |
| | | | JP | 62180726 U | 17-11-1987 |
| US 3952593 | A | 27-04-1976 | AUCUN | | |
| US 6578416 | B1 | 17-06-2003 | AU | 7360200 A | 10-04-2001 |
| | | | CA | 2384677 A1 | 15-03-2001 |
| | | | EP | 1210566 A1 | 05-06-2002 |
| | | | JP | 2003508775 T | 04-03-2003 |
| | | | WO | 0118503 A1 | 15-03-2001 |
| EP 1435512 | A | 07-07-2004 | EP | 1435512 A1 | 07-07-2004 |
| | | | US | 2004199131 A1 | 07-10-2004 |
| | | | AU | 2405102 A | 27-05-2002 |
| | | | AU | 2405202 A | 27-05-2002 |
| | | | CN | 1582389 A | 16-02-2005 |
| | | | WO | 0239937 A1 | 23-05-2002 |
| | | | WO | 0239938 A1 | 23-05-2002 |
| | | | WO | 03023332 A1 | 20-03-2003 |
| | | | JP | 3476803 B2 | 10-12-2003 |
| | | | JP | 2003153931 A | 27-05-2003 |
| | | | JP | 3476804 B2 | 10-12-2003 |
| | | | JP | 2003153932 A | 27-05-2003 |
| | | | JP | 3432817 B2 | 04-08-2003 |
| | | | JP | 2003156569 A | 30-05-2003 |
| | | | JP | 3432820 B1 | 04-08-2003 |
| | | | JP | 2003270191 A | 25-09-2003 |
| | | | JP | 3476813 B2 | 10-12-2003 |
| | | | JP | 2003175067 A | 24-06-2003 |
| | | | TW | 592678 B | 21-06-2004 |
| | | | TW | 509564 B | 11-11-2002 |
| | | | TW | 517131 B | 11-01-2003 |
| WO 9910714 | A | 04-03-1999 | AU | 9032198 A | 16-03-1999 |
| | | | EP | 1017971 A1 | 12-07-2000 |
| | | | WO | 9910714 A1 | 04-03-1999 |
| | | | US | 6490920 B1 | 10-12-2002 |

EPO FORM P0460

Pour tout renseignement concernant cette annexe : voir Journal Officiel de l'Office européen des brevets, No.12/82